# EUROPEAN PATENT SPECIFICATION

(11) **EP 4 024 007 B1**
(45) Date of publication and mention of the grant of the patent: **28.01.2026**
(21) Application number: 20862576.4
(22) Date of filing: 10.07.2020
(51) Int. Cl.: G01C 21/36, B60W 30/12, G06V 20/56

(54) **METHOD AND DEVICE FOR DETERMINING TRAFFIC-LANE LINE INFORMATION**
VERFAHREN UND VORRICHTUNG ZUR BESTIMMUNG VON FAHRSPURLINIENINFORMATIONEN
PROCÉDÉ ET DISPOSITIF DE DÉTERMINATION D'INFORMATIONS DE LIGNE DE VOIE DE CIRCULATION

(30) Priority: 09.09.2019 CN 201910863626
(43) Date of publication of application: 06.07.2022
(73) Proprietor: Shenzhen Yinwang Intelligent Technologies Co., Ltd., Shenzhen, Guangdong 518129 (CN)
(72) Inventor: WANG, Zisheng, Shenzhen, Guangdong 518129 (CN); CHI, Qinghua, Shenzhen, Guangdong 518129 (CN)
(74) Representative: Thun, Clemens
(86) International application number: PCT/CN2020/101452
(87) International publication number: WO 2021/047275

(56) References cited:
- WO-A1-2018/015811
- CN-A- 105 197 014
- CN-A- 105 698 812
- CN-A- 105 973 245
- CN-A- 107 021 104
- CN-A- 107 499 310
- CN-A- 108 303 103
- CN-A- 109 766 878
- CN-A- 109 829 351
- CN-A- 110 174 113
- US-A1- 2015 025 789
- US-A1- 2019 005 814

## Description

### CROSS-REFERENCE TO RELATED APPLICATIONS

This application claims priority to Chinese Patent Application No. 201910863626.8, filed with the China National Intellectual Property Administration on September 9, 2019 and entitled "LANE LINE INFORMATION DETERMINING METHOD AND APPARATUS.

### TECHNICAL FIELD

This application relates to the field of autonomous driving or intelligent driving, and in particular, to a lane line information determining method and apparatus.

### BACKGROUND

Lane line detection imposes a significant restriction on a driving policy and is therefore critical to enabling an autonomous driving function. In a conventional method, artificially set features are used to extract related lane segmentation. Performance of the method is good in highway scenarios, but a generalization capability of the method is very poor. Performance of the method is very unstable for different light and ground types. A deep learning method improves generalization performance for detection. However, currently in complex scenarios, for example, a lane line is blocked or unclear on a road surface, a large quantity of false detection and missing detection occurs when detection is performed.

In US 2019/0005814 Al a vehicle determination apparatus and a vehicle determination method is presented. Hereby a direction identification unit identifies a traveling direction in which a surrounding vehicle travels in a partial region of a region indicated by image information obtained by photographing using a camera.

The WO 2018/015811 A1 deals with the topic of crowdsourcing and distributing a sparse map, as well as lane measurements for autonomous vehicle navigation. Hereby the document provides systems and methods for generating, distributing, and using a sparse map and lane measurements for autonomous vehicle navigation..

In conclusion, a method for accurately determining lane line information is urgently needed at present.

### SUMMARY

The present invention is defined by the independent claims. Further advantageous developments are shown by the dependent claims.

This application provides a lane line information determining method and apparatus, to accurately determine lane line information.

According to a first aspect, this application provides a lane line information determining method, where the method includes: A first apparatus obtains first lane line information corresponding to a location of a vehicle, where the first lane line information is from a map server. The first apparatus obtains second lane line information. The first apparatus determines third lane line information based on the first lane line information and the second lane line information. Optionally, the first apparatus may be a chip or an integrated circuit.

According to this solution, lane line information obtained from the map server is merged with detected lane line information, so that false detection is eliminated and information about a lane line whose detection is missing is retrieved, to help improve lane line detection performance, accurately determine lane line information, and improve driving performance and safety.

According to the invention, the first lane line information includes information about at least one first lane line; the second lane line information includes information about at least one second lane line; and the third lane line information includes information about a part of or all lane lines in the at least one second lane line.

According to the invention, if the first apparatus determines that at least one lane line in the at least one second lane line is abnormal or detects that map information of the map server changes, the first apparatus sends a request message to the map server, where the request message is used to request to obtain the first lane line information. According to this solution, when a road segment changes, the map server may be requested to send the first lane line information corresponding to the location of the vehicle, to reduce a data transmission amount, and help improve lane line detection performance.

In a possible implementation method, that the first apparatus determines third lane line information based on the first lane line information and the second lane line information includes: The first apparatus determines the third lane line information based on the first lane line information, the second lane line information, and at least one piece of historical lane line information.

According to the invention, the first lane line information includes at least one of a first lane line quantity, a first lane line type, or a lane line curve type.

According to the invention, the second lane line information includes at least one of a second lane line quantity, a second lane lijne type, a lane line lateral offset, a lane line orientation, a lane line curvature, or a derivative of the lane line curvature.

According to a second aspect, this application provides a lane line information determining apparatus. The apparatus may be a first apparatus, or may be a chip used for the first apparatus. The apparatus has a function of implementing the first aspect or the embodiments of first aspect. The function may be implemented by hardware, or may be implemented by hardware executing corresponding software. The hardware or the software includes one or more modules corresponding to the function.

According to a third aspect, this application provides a lane line information determining apparatus, including a processor and a memory. The memory is configured to store computer-executable instructions, and when the apparatus runs, the processor executes the computer-executable instructions stored in the memory, so that the apparatus performs the method according to any one of the first aspect or the embodiments of the first aspect.

According to a fourth aspect, this application provides a lane line information determining apparatus, including units or means (means) configured to perform steps in the first aspect or the embodiments of the first aspect.

According to a fifth aspect, this application provides a lane line information determining apparatus, including a processor and an interface circuit. The processor is configured to: communicate with another apparatus through the interface circuit, and perform the method according to any one of the first aspect or the embodiments of the first aspect. There are one or more processors.

According to a sixth aspect, this application provides a lane line information determining apparatus, including a processor, configured to: connect to a memory, and invoke a program stored in the memory, to perform the method according to any one of the first aspect or the embodiments of the first aspect. The memory may be located inside the apparatus, or may be located outside the apparatus. In addition, there are one or more processors.

According to a seventh aspect, this application further provides a computer-readable storage medium, and the computer-readable storage medium stores instructions. When the instructions are run on a computer, a processor is enabled to perform the method according to any one of the first aspect or the embodiments of the first aspect.

According to an eighth aspect, this application further provides a computer program product including instructions. When the computer program product runs on a computer, the computer is enabled to perform the method according to any one of the first aspect or the embodiments of the first aspect.

According to a ninth aspect, this application further provides a chip system, including a processor, configured to perform the method according to any one of the first aspect or the embodiments of the first aspect.

### BRIEF DESCRIPTION OF DRAWINGS

FIG. 1 is a schematic diagram of a possible network architecture according to this application;
FIG. 2 is a schematic flowchart of a lane information determining method according to this application;
FIG. 3 is a schematic diagram of an in-vehicle system according to this application;
FIG. 4 is a schematic diagram of another in-vehicle system according to this application;
FIG. 5 is a schematic flowchart of another lane information determining method according to this application;
FIG. 6 is a schematic flowchart of another lane information determining method according to this application;
FIG. 7 is a schematic flowchart of another lane information determining method according to this application;
FIG. 8 is a schematic flowchart of another lane information determining method according to this application;
FIG. 9 is a schematic flowchart of a lane information determining apparatus according to this application; and
FIG. 10 is a schematic flowchart of another lane information determining apparatus according to this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

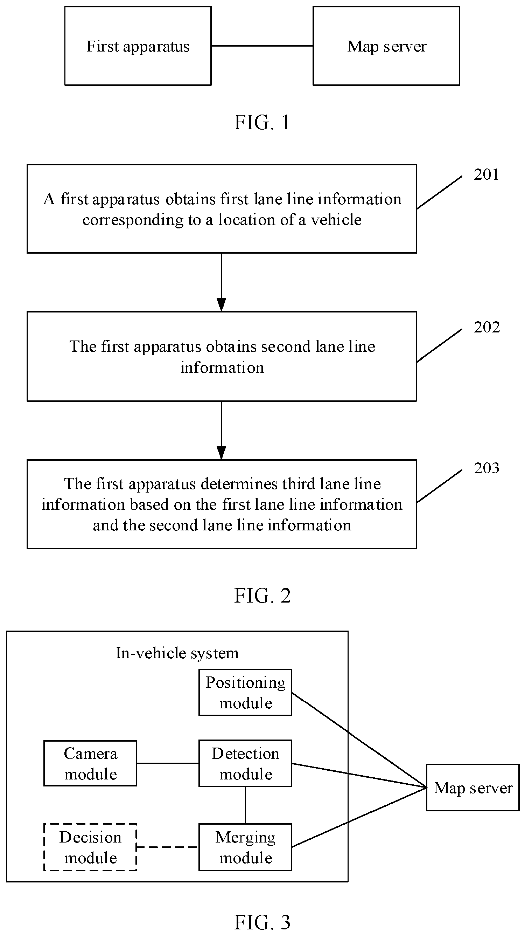

FIG. 1 is a possible network architecture to which this application is applicable. The architecture includes a first apparatus and a map server.

It should be explained herein that the first apparatus may include some or all of a central processing unit (Central Processing Unit, CPU), digital signal processing (digital signal processing, DSP), a graphics processing unit (Graphics Processing Unit, GPU), or a memory module. The first apparatus may be physically independent of a vehicle but may establish a connection to the vehicle in a wired or wireless manner, or the first apparatus may be mounted on the vehicle as a part of the vehicle. Specifically, the first apparatus may be integrated into an in-vehicle central controller, or may be an independently designed device. The map server refers to a background server configured with a map. The map may be a possible map in a conventional technology, for example, Baidu Maps or AutoNavi Map. This is not specifically limited in the embodiments of this application.

Based on the network architecture shown in FIG. 1, this application provides a lane information determining method. Refer to FIG. 2. The method includes the following steps.

Step 201: The first apparatus obtains first lane line information corresponding to a location of a vehicle, where the first lane line information is from the map server.

According to the invention, a positioning module sends, to the map server, location information of the vehicle, and then the map server obtains, from the map server based on the location information of the vehicle, lane line information corresponding to the location, that is, the first lane line information, and then sends the first lane line information to the first apparatus. Alternatively, the map server sends the first lane line information to another apparatus or module in an in-vehicle system, and then the another apparatus or module forwards the first lane line information to the first apparatus. Specifically, the positioning module may be a positioning module in the in-vehicle system.

The first lane line information herein includes information about at least one first lane line. The first lane line information includes at least one of a first lane line quantity, a first lane line type, or a lane line curve type. The first lane line quantity is a quantity of lane lines that are stored in the map server and correspond to the location of the vehicle, for example, 2, 3, or 4. The first lane line type is a lane line type that is stored in the map server and corresponds to the location of the vehicle, for example, a double-yellow line, a single yellow line, a white dashed line, or a white solid line. The lane line curve type includes a curve or a straight line.

Step 202: The first apparatus obtains second lane line information.

The second lane line information includes information about at least one second lane line. The second lane line information may be at least one of a second lane line quantity, a second lane line type, a lane line lateral offset, a lane line orientation, a lane line curvature, or a derivative of the lane line curvature. The second lane line quantity is a quantity of lane lines that are detected by an image shooting apparatus, for example, 2, 3, or 4. The second lane line type is a lane line type that is detected by the image shooting apparatus, for example, the double-yellow line, the single yellow line, the white dashed line, or the white solid line. The lane line lateral offset refers to a lateral offset distance between each lane line and the vehicle. The lane line orientation is an orientation of each lane line in a vehicle coordinate system. The lane line curvature refers to a bending degree of each lane line.

In an optional design, the first apparatus detects image information in one or more frames of image information to obtain the second lane line information. Further, optionally, the first apparatus may detect the image information in the one or more frames of image information to obtain pixel information, and process the pixel information to obtain the second lane line information. In this step, the one or more frames of image information are obtained from a vehicle-mounted apparatus. For example, the vehicle-mounted apparatus may be a photosensitive component mounted on a vehicle body (for example, a vehicle front, a vehicle rear, or a vehicle side), and the component shoots a road segment in front, to obtain the one or more frames of image information.

In another optional design, the first apparatus obtains the second lane line information from a second apparatus. The second apparatus may be any possible apparatus in the in-vehicle system, for example, a central controller. For a specific process in which the second apparatus obtains the second lane line information, refer to a process in which the first apparatus obtains the second lane line information in the foregoing optional design. Details are not described herein again.

Step 203: The first apparatus determines third lane line information based on the first lane line information and the second lane line information.

In some scenarios, a lane line is not clearly presented due to some reasons, some lane lines are blocked by a vehicle, and a road surface is relatively untidy. In this case, the second lane line information detected by the image shooting apparatus may be inaccurate. For example, the detected second lane line quantity is incorrect. For example, some lane lines are unclear, causing the detected second lane line quantity to be less than an actual quantity of lane lines. Alternatively, strip smudges on some roads are mistakenly detected, causing the detected second lane line quantity to be greater than an actual quantity of lane lines. For another example, the detected second lane line type is incorrect.

Therefore, in step 203, the first apparatus merges the obtained first lane line information from the map server with the obtained second lane line information from the image shooting apparatus, to obtain the third lane line information. It may be considered as that the second lane line information is calibrated by using the first lane line information, so that false detection is eliminated and information about a lane line whose detection is missing is retrieved, to obtain the third lane line information. The third lane line information may be understood as updated second lane line information.

The third lane line information includes information about a part of or all lane lines in the at least one second lane line. The third lane line information may be at least one of a third lane line quantity, a third lane line type, a lane line lateral offset, a lane line orientation, a lane line curvature, or a derivative of the lane line curvature. For explanations of the lane line quantity, type, lateral offset, orientation, and curvature, and the derivative of the lane line curvature, refer to the foregoing related descriptions of the first lane line. Details are not described herein again.

In an implementation, in a specific implementation of step 203, the first apparatus may determine the third lane line information based on the first lane line information, the second lane line information, and at least one piece of historical lane line information. The historical lane line information may be a final result of lane line information that is detected at a previous moment or a previous location. To be specific, when the third lane line information is determined, reference is further made to the historical lane line information, so that lane line detection accuracy can be improved.

In an implementation, the third lane line information may be used as finally obtained lane line information corresponding to the location of the vehicle.

In an implementation, during traveling of the vehicle, detection may be performed at a next location based on the third lane line information, that is, the third lane line information is used as historical lane line information, to perform lane line detection at the next location, so that the lane line detection accuracy is continuously improved.

According to this solution, lane line information obtained from the map server is merged with detected lane line information, so that false detection is eliminated and information about a lane line whose detection is missing is retrieved, to help improve lane line detection performance, accurately determine lane line information, and improve driving performance and safety.

In the implementation solution of step 201 to step 203, each time the map server receives the location information of the vehicle sent by the positioning module, the map server sends the corresponding first lane line information to the first apparatus or the another apparatus or module in the in-vehicle system. However, in some scenarios, if a vehicle travels on a straight lane, lane line information is continuous, that is, remains unchanged within specific time or a specific distance. Therefore, the first apparatus does not need to perform the foregoing solution of step 201 to step 203 to perform lane line detection, and therefore does not need to obtain the foregoing first lane line information. Therefore, in an extension solution of the foregoing embodiment, when determining that lane line detection needs to be performed, the first apparatus sends a request message to the map server, where the request message is used to request to obtain the first lane line information. The map server obtains corresponding first lane line information based on location information of the vehicle that is sent last time by the positioning module and sends the corresponding first lane line information to the first apparatus or the another apparatus or module in the in-vehicle system, only when the map server receives the request message. This helps reduce signaling overheads.

In an implementation, in one or more of the following cases, the first apparatus determines that lane line detection needs to be performed:

Case 1: The first apparatus determines that at least one lane line in the at least one second lane line is abnormal.

For example, when the second lane line quantity is different from a lane line quantity determined when the vehicle is at the previous location, it is determined that the lane line is abnormal; when the second lane line type is different from a lane line type determined when the vehicle is at the previous location, it is determined that the lane line is abnormal; or when the lane line curvature changes greatly compared with a curvature of the vehicle at the previous location, it is determined that the lane line is abnormal.

Case 2: The first apparatus determines that map information changes.

A method for the first apparatus to determine that the map information changes includes but is not limited to:
Method 1: The first apparatus detects that the map information changes.
Method 2: The first apparatus receives, near an intersection or at a location, a signal that triggers GPS calibration or map calibration, for example, a base station broadcast signal or a calibration location signal, and therefore determines that map information changes.

In this case, when the first apparatus determines that the map information changes, it means that the lane line information changes. Therefore, the first apparatus may request to obtain the first lane line information from the map server, to determine the third lane line information.

According to the extension solution, when a road segment changes, the map server may be requested to send the first lane line information corresponding to the location of the vehicle, that is, the map information is sparsely used, to reduce a data transmission amount, and help improve the lane line detection performance.

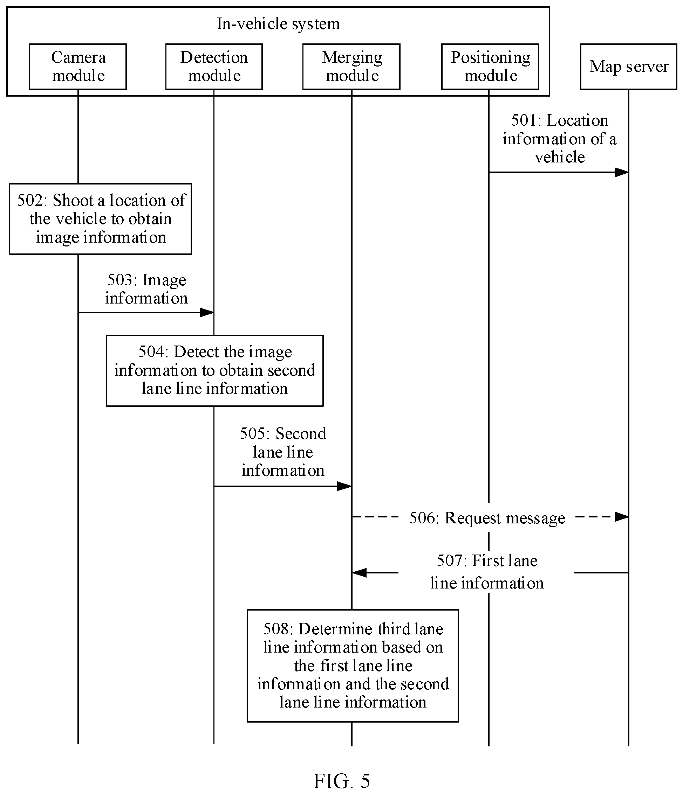

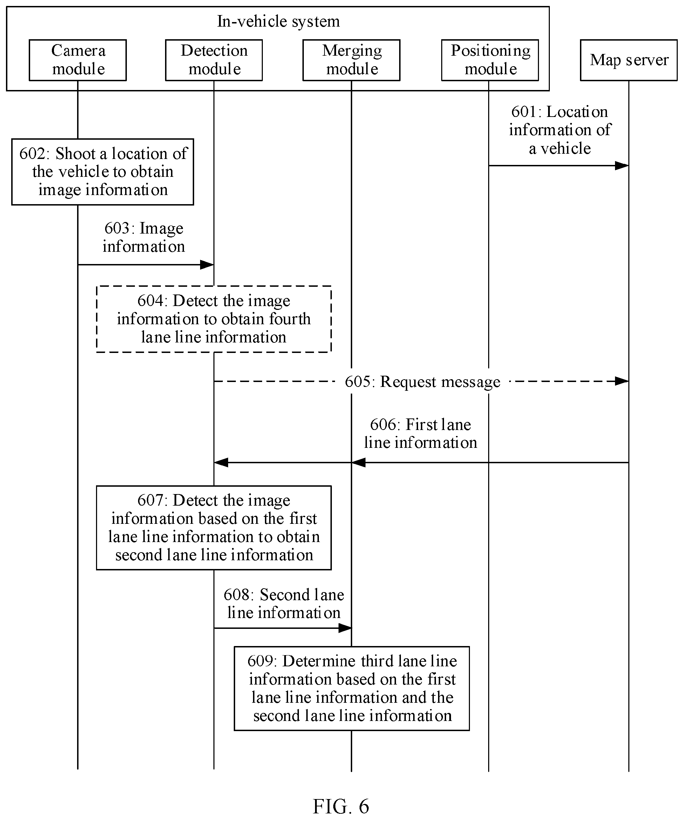

The following describes the method in the embodiment in FIG. 2 with reference to a specific example. In the following example, a camera module may be any photosensitive component, for example, a camera lens. The positioning module may be used for location sensing, for example, may be a location sensor. A detection module is configured to detect lane line information. A merging module is configured to merge the lane line information (namely, the second lane line information) from the detection module and a lane line (namely, the first lane line information) from the map server, to obtain final lane line information (namely, the third lane line information). A decision module is configured to decide to perform driving control based on the final lane line information. In specific implementation, the detection module, the merging module, and the decision module may each include a processor (for example, a CPU, a GPU, or a DSP) and a memory module. Alternatively, it is understood as that logical function division is performed on a processor and a memory module, to obtain modules having different functions, namely, the detection module, the merging module, and the decision module. FIG. 3 is a schematic diagram of a structure of an in-vehicle system according to this application. The in-vehicle system includes a camera module, a detection module, a merging module, and a positioning module. Optionally, the in-vehicle system may further include a decision module. For functions of the detection module, the merging module, and the decision module, refer to embodiments in FIG. 5 and FIG. 6.

In an implementation, the foregoing first apparatus includes the merging module in FIG. 3. Further, optionally, the foregoing second apparatus includes the detection module in FIG. 3. In an optional design, the first apparatus obtains second lane line information from the second apparatus.

In another implementation, the foregoing first apparatus includes the merging module and the detection module in FIG. 3. In this implementation, that the first apparatus obtains the second lane line information may be understood as that the first apparatus generates the second lane line information.

In another implementation, the foregoing first apparatus includes the merging module, the detection module, and the decision module in FIG. 3. In this implementation, that the first apparatus obtains the second lane line information may be understood as that the first apparatus generates the second lane line information.

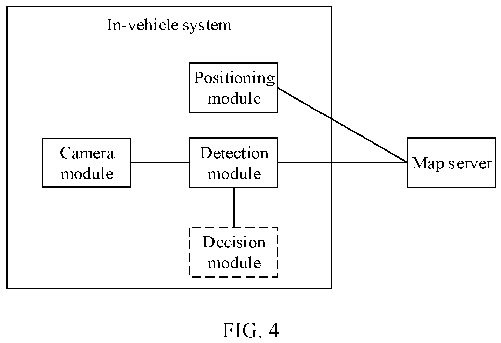

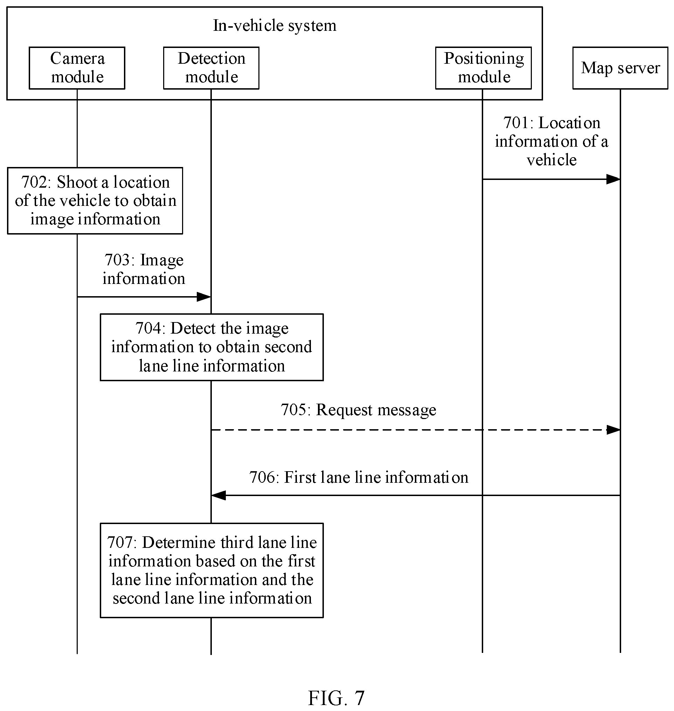

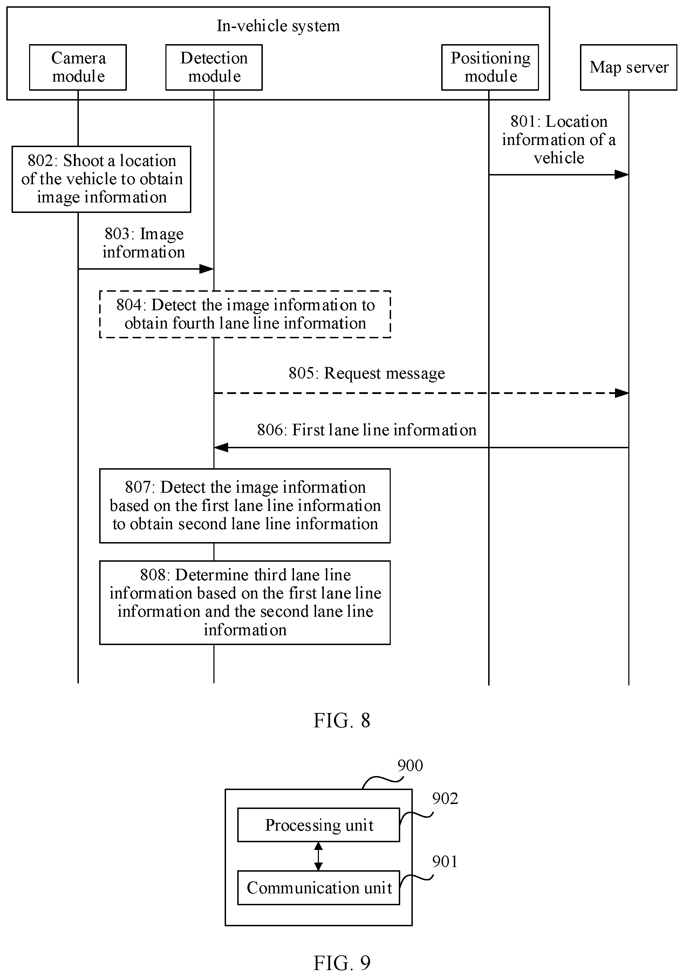

FIG. 4 is a schematic diagram of another in-vehicle system according to this application. The in-vehicle system includes a camera module, a detection module, and a positioning module. Optionally, the in-vehicle system may further include a decision module. For functions of the detection module and the decision module, refer to embodiments in FIG. 7 and FIG. 8.

In an implementation, the foregoing first apparatus includes the detection module in FIG. 4. In this implementation, the first apparatus generates second lane line information.

In another implementation, the foregoing first apparatus includes the detection module and the decision module in FIG. 4. In this implementation, the first apparatus generates second lane line information.

A difference between the in-vehicle system shown in FIG. 4 and the in-vehicle system shown in FIG. 3 lies in that a function of the merging module is integrated into the detection module in FIG. 4, that is, the detection module in FIG. 4 has the functions of the detection module and the merging module in FIG. 3.

The following first describes, for the in-vehicle system shown in FIG. 3, the method in the embodiment shown in FIG. 2.

FIG. 5 is a schematic flowchart of another lane line information determining method according to this application. The method is based on the in-vehicle system shown in FIG. 3. In this example, the foregoing first apparatus includes the merging module in FIG. 3, and the foregoing second apparatus includes the detection module in FIG. 3.

The method includes the following steps.

Step 501: The positioning module sends location information of a vehicle to a map server. Correspondingly, the map server may receive the location information of the vehicle.

During traveling of the vehicle, the positioning module may continuously report location information of a current location of the vehicle to the map server, for example, periodically report the location information.

Step 502: The camera module shoots the location of the vehicle to obtain image information.

The camera module may obtain one or more frames of image information by driving a photosensitive component mounted on a vehicle body (for example, a vehicle front, a vehicle rear, or a vehicle side).

Step 503: The camera module sends the image information to the detection module. Correspondingly, the detection module may receive the image information.

Step 504: The detection module detects the image information to obtain second lane line information.

The detection module may perform network detection on each obtained frame of image information to obtain pixel information, and then perform post-processing on the pixel information to obtain the second lane line information.

Step 505: The detection module sends first lane line information to the merging module. Correspondingly, the merging module may receive the first lane line information.

Step 506: If determining that a second lane line is abnormal or detecting that map information changes, the merging module sends a request message to the map server, where the request message is used to request to obtain the first lane line information corresponding to the location of the vehicle. Correspondingly, the map server may receive the request message.

Step 506 is optional.

Step 507: The map server sends the first lane line information to the merging module. Correspondingly, the merging module may receive the first lane line information.

It should be noted that a relationship between step 506 and step 507 is as follows:
In a first implementation method, whether the map server sends the first lane line information is unrelated to whether the merging module sends the request message. To be specific, the map server continuously sends the first lane line information to the merging module based on the location information of the current location in step 501, instead of sending the first lane line information only after receiving the foregoing request message.

In a second implementation method, whether the map server sends the first lane line information is related to whether the merging module sends the request message. To be specific, when the merging module sends the request message, the map server is triggered to send, to the merging module, the first lane line information corresponding to the location information of the current location of the vehicle. When the merging module does not send the request message, the map server does not send, to the merging module, the first lane line information corresponding to the location information of the current location of the vehicle.

Step 508: The merging module determines third lane line information based on the first lane line information and the second lane line information.

Optionally, the merging module may determine the third lane line information based on the first lane line information, the second lane line information, and at least one piece of historical lane line information.

Optionally, after step 508, the merging module may further send the third lane line information to a decision module, and the decision module performs autonomous driving control based on the third lane line information.

It should be noted that step 501 may be performed at any step before step 507. This is not limited in this application.

FIG. 6 is a schematic flowchart of another lane line information determining method according to this application. The method is based on the in-vehicle system shown in FIG. 3. In this example, the foregoing first apparatus includes the merging module in FIG. 3, and the foregoing second apparatus includes the detection module in FIG. 3.

The method includes the following steps.

Step 601: The positioning module sends location information of a vehicle to a map server. Correspondingly, the map server may receive the location information of the vehicle.

During traveling of the vehicle, the positioning module may continuously report location information of a current location of the vehicle to the map server, for example, periodically report the location information.

Step 602: The camera module shoots the location of the vehicle to obtain image information.

The camera module may obtain one or more frames of image information by driving a photosensitive component mounted on a vehicle body (for example, a vehicle front, a vehicle rear, or a vehicle side).

Step 603: The camera module sends the image information to the detection module. Correspondingly, the detection module may receive the image information.

Step 604: The detection module detects the image information to obtain fourth lane line information.

The detection module may perform network detection on each obtained frame of image information to obtain pixel information, and then perform post-processing on the pixel information to obtain the fourth lane line information. The fourth lane line information includes information about at least one fourth lane line. The fourth lane line information may be at least one of a fourth lane line quantity, a fourth lane line type, a lane line lateral offset, a lane line orientation, a lane line curvature, or a derivative of the lane line curvature.

Step 605: If determining that a fourth lane line is abnormal or detecting that map information changes, the detection module sends a request message to the map server, where the request message is used to request to obtain first lane line information corresponding to the location of the vehicle. Correspondingly, the map server may receive the request message.

Step 604 and step 605 are optional.

Step 606: The map server sends the first lane line information to the detection module and the merging module. Correspondingly, the detection module and the merging module may receive the first lane line information.

It should be noted that a relationship between step 605 and step 606 is as follows:

In a first implementation method, whether the map server sends the first lane line information is unrelated to whether the detection module sends the request message. To be specific, the map server continuously sends the first lane line information to the detection module and the merging module based on the location information of the current location in step 601, instead of sending the first lane line information only after receiving the foregoing request message.

In a second implementation method, whether the map server sends the first lane line information is related to whether the detection module sends the request message. To be specific, when the detection module sends the request message, the map server is triggered to send, to the detection module and the merging module, the first lane line information corresponding to the location information of the current location of the vehicle. When the detection module does not send the request message, the map server does not send, to the detection module and the merging module, the first lane line information corresponding to the location information of the current location of the vehicle.

Optionally, in step 606, the map server may send the first lane line information only to the merging module, and then the merging module sends the first lane line information to the detection module. Alternatively, the map server may send the first lane line information only to the detection module, and the detection module may subsequently send the first lane line information to the merging module.

Step 607: The detection module detects the image information based on the first lane line information, to obtain second lane line information.

The image information in this step is the image information in step 604. In this step, the first lane line information is used as a reference, to detect the image information again, so that the second lane line information that is more accurate than the fourth lane line information can be obtained.

For example, the detection module may perform network detection on each obtained frame of image information based on the first lane line information to obtain the pixel information, and then perform post-processing on the pixel information to obtain the second lane line information.

Step 608: The detection module sends the second lane line information to the merging module. Correspondingly, the merging module may receive the second lane line information.

Step 609: The merging module determines third lane line information based on the first lane line information and the second lane line information.

Optionally, the merging module may determine the third lane line information based on the first lane line information, the second lane line information, and at least one piece of historical lane line information.

Optionally, after step 609, the merging module may further send the third lane line information to a decision module, and the decision module performs autonomous driving control based on the third lane line information.

FIG. 7 is a schematic flowchart of another lane line information determining method according to this application. The method is based on the in-vehicle system shown in FIG. 4. In this example, the foregoing first apparatus includes the detection module in FIG. 4.

The method includes the following steps.

Step 701 to step 704 are the same as step 501 to step 504 in the embodiment in FIG. 5.

Step 705: If determining that a second lane line is abnormal or detecting that map information changes, the detection module sends a request message to the map server, where the request message is used to request to obtain first lane line information corresponding to the location of the vehicle. Correspondingly, the map server may receive the request message.

Step 705 is optional.

Step 706: The map server sends the first lane line information to the detection module. Correspondingly, the detection module may receive the first lane line information.

It should be noted that a relationship between step 705 and step 706 is as follows:
In a first implementation method, whether the map server sends the first lane line information is unrelated to whether the detection module sends the request message. To be specific, the map server continuously sends the first lane line information to the detection module based on the location information of the current location in step 701, instead of sending the first lane line information only after receiving the foregoing request message.

In a second implementation method, whether the map server sends the first lane line information is related to whether the detection module sends the request message. To be specific, when the detection module sends the request message, the map server is triggered to send, to the detection module, the first lane line information corresponding to the location information of the current location of the vehicle. When the detection module does not send the request message, the map server does not send, to the detection module, the first lane line information corresponding to the location information of the current location of the vehicle.

Step 707: The detection module determines third lane line information based on the first lane line information and the second lane line information.

Optionally, the detection module may determine the third lane line information based on the first lane line information, the second lane line information, and at least one piece of historical lane line information.

Optionally, after step 707, the detection module may further send the third lane line information to a decision module, and the decision module performs autonomous driving control based on the third lane line information.

It should be noted that step 701 may be performed at any step before step 706. This is not limited in this application.

FIG. 8 is a schematic flowchart of another lane line information determining method according to this application. The method is based on the in-vehicle system shown in FIG. 4. In this example, the foregoing first apparatus includes the detection module in FIG. 4.

The method includes the following steps.

Step 801 to step 804 are the same as step 601 to step 604 in Embodiment 6. Refer to the foregoing descriptions.

Step 805: If determining that a fourth lane line is abnormal or detecting that map information changes, the detection module sends a request message to the map server, where the request message is used to request to obtain first lane line information corresponding to the location of the vehicle. Correspondingly, the map server may receive the request message.

The fourth lane line herein is similar to the fourth lane line in the embodiment in FIG. 6. Refer to the foregoing descriptions.

Step 804 and step 805 are optional.

Step 806: The map server sends the first lane line information to the detection module. Correspondingly, the detection module may receive the first lane line information.

It should be noted that a relationship between step 805 and step 806 is as follows:

In a first implementation method, whether the map server sends the first lane line information is unrelated to whether the detection module sends the request message. To be specific, the map server continuously sends the first lane line information to the detection module based on the location information of the current location in step 801, instead of sending the first lane line information only after receiving the foregoing request message.

In a second implementation method, whether the map server sends the first lane line information is related to whether the detection module sends the request message. To be specific, when the detection module sends the request message, the map server is triggered to send, to the detection module, the first lane line information corresponding to the location information of the current location of the vehicle. When the detection module does not send the request message, the map server does not send, to the detection module, the first lane line information corresponding to the location information of the current location of the vehicle.

Step 807: The detection module detects the image information based on the first lane line information, to obtain second lane line information.

The image information in this step is the image information in step 804. In this step, the first lane line information is used as a reference, to detect the image information again, so that the second lane line information that is more accurate than the fourth lane line information can be obtained.

For example, the detection module may perform network detection on each obtained frame of image information based on the first lane line information to obtain the pixel information, and then perform post-processing on the pixel information to obtain the second lane line information.

Step 808: The detection module determines third lane line information based on the first lane line information and the second lane line information.

Optionally, the detection module may determine the third lane line information based on the first lane line information, the second lane line information, and at least one piece of historical lane line information.

Optionally, after step 808, the detection module may further send the third lane line information to a decision module, and the decision module performs autonomous driving control based on the third lane line information.

The foregoing mainly describes, from a perspective of interaction between network elements, solutions provided in this application. It may be understood that, to implement the foregoing functions, each network element includes a corresponding hardware structure and/or software module for implementing each function. A person skilled in the art should be easily aware that units, algorithms, and steps in the examples described with reference to the embodiments disclosed in this specification can be implemented by hardware or a combination of hardware and computer software in the present invention. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of the present invention.

FIG. 9 is a block diagram of a possible example of a lane line information determining apparatus 900 in this application, and the apparatus 900 may exist in a form of software or hardware. The apparatus 900 may include a processing unit 902 and a communication unit 901. In an implementation, the communication unit 901 may include a receiving unit and a sending unit. The processing unit 902 is configured to control and manage an action of the apparatus 900. The communication unit 901 is configured to support the apparatus 900 in communicating with another network entity. Further, the processing unit may be one or more processing units.

The processing unit 902 may be a processor or a controller, for example, may be a general-purpose central processing unit (central processing unit, CPU), a general-purpose processor, a DSP, an application-specific integrated circuit (application-specific integrated circuit, ASIC), a field programmable gate array (field programmable gate array, FPGA) or another programmable logic device, a transistor logic device, a hardware component, or any combination thereof. The processing module may implement or execute various example logical blocks, modules, and circuits described with reference to content disclosed in this application. Alternatively, the processor may be a combination of processors implementing a computing function, for example, a combination of one or more microprocessors, or a combination of a DSP and at least one microprocessor. The communication unit 901 is an interface circuit of the apparatus, and is configured to receive a signal from another apparatus. For example, when the apparatus is implemented as a chip, the communication unit 901 is an interface circuit, of the chip, that is configured to receive a signal from another chip or apparatus, or the communication unit 901 is an interface circuit, of the chip, that is configured to send a signal to another chip or apparatus. Further, when the processing unit 902 is a processor, the processing unit 902 may be one or more processors. If the processor is a plurality of processors, the plurality of processors cooperate to complete corresponding function processing. Optionally, the plurality of processors may include one or more of a CPU, a DSP, or a GPU.

The apparatus 900 may be the first apparatus in the foregoing embodiments, or may be a chip used for the first apparatus. For example, when the apparatus 900 is the first apparatus, the processing unit 902 may be, for example, one or more processors, and the communication unit 901 may be, for example, a transceiver. Optionally, the transceiver may include a radio frequency circuit, and the storage unit may be, for example, a memory. For example, when the apparatus 900 is the chip used for the first apparatus, the processing unit 902 may be, for example, one or more processors, and the communication unit 901 may be, for example, an input/output interface, a pin, or a circuit. The processing unit 902 may execute computer-executable instructions stored in a storage unit. Optionally, the storage unit is a storage unit inside the chip, such as a register or a buffer. Alternatively, the storage unit may be a storage unit that is inside the first apparatus and that is located outside the chip, such as a read-only memory (read-only memory, ROM), another type of static storage device that can store static information and instructions, or a random access memory (random access memory, RAM). The one or more processors may include one or more of a CPU, a DSP, or a GPU.

In an embodiment, if the apparatus is the first apparatus in the foregoing embodiments, the communication unit 901 is configured to: obtain first lane line information corresponding to a location of a vehicle, where the first lane line information is from a map server; and obtain second lane line information; and a processing unit 902, configured to determine third lane line information based on the first lane line information and the second lane line information.

In a possible implementation method, the first lane line information includes information about at least one first lane line; the second lane line information includes information about at least one second lane line; and the third lane line information includes information about a part of or all lane lines in the at least one second lane line.

In a possible implementation method, the processing unit 902 is further configured to determine that at least one lane line in the at least one second lane line is abnormal or detect that map information of the map server changes; and the communication unit 901 is further configured to send a request message to the map server, where the request message is used to request to obtain the first lane line information.

In a possible implementation method, the processing unit 902 is specifically configured to determine the third lane line information based on the first lane line information, the second lane line information, and at least one piece of historical lane line information.

In a possible implementation method, the first lane line information includes at least one of a first lane line quantity, a first lane line type, or a lane line curve type.

In a possible implementation method, the second lane line information includes at least one of a second lane line quantity, a second lane line type, a lane line lateral offset, a lane line orientation, a lane line curvature, or a derivative of the lane line curvature.

It may be understood that for a specific implementation process and corresponding beneficial effects of the apparatus used in the lane line information determining method, refer to related descriptions in the foregoing method embodiments. Details are not described herein again.

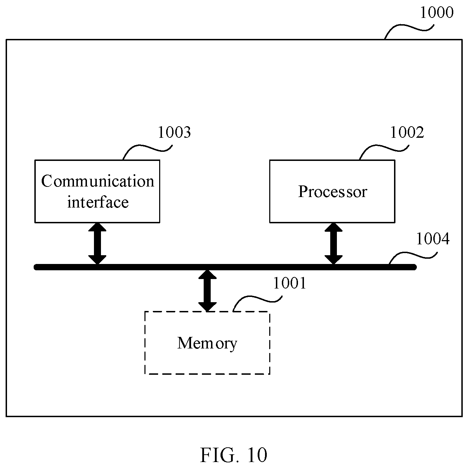

FIG. 10 is a schematic diagram of another lane line information determining apparatus 1000 according to this application. The apparatus 1000 may be the first apparatus in the foregoing embodiments. The apparatus 1000 includes the processor 1002 and the communication interface 1003. Optionally, the apparatus 1000 may further include the memory 1001. Optionally, the apparatus 1000 may further include a communication line 1004. The communication interface 1003, the processor 1002, and the memory 1001 may be connected to each other through the communication line 1004. The communication line 1004 may be a peripheral component interconnect (peripheral component interconnect, PCI for short) bus, an extended industry standard architecture (peripheral component interconnect, EISA for short) bus, or the like. The communication line 1004 may be classified into an address bus, a data bus, a control bus, and the like. For ease of representation, only one thick line is used for representation in FIG. 10, but this does not mean that there is only one bus or only one type of bus.

The processor 1002 may be a CPU, a microprocessor, an ASIC, or one or more integrated circuits configured to control program execution in the solutions of this application. Optionally, the processor 1002 may alternatively include one or more of a CPU, a DSP, or a GPU.

The communication interface 1003 uses any apparatus like a transceiver, and is configured to communicate with another device or communication network, such as the Ethernet, a radio access network (radio access network, RAN), a wireless local area network (wireless local area network, WLAN), or a wired access network.

The memory 1001 may be a ROM, another type of static storage device that can store static information and instructions, a RAM, or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in an instruction form or a data structure form and that can be accessed by a computer. However, it is not limited thereto. The memory may exist independently, and is connected to the processor through the communication line 1004. Alternatively, the memory may be integrated with the processor.

The memory 1001 is configured to store computer-executable instructions for performing the solutions in this application, and the processor 1002 controls the execution. The processor 1002 is configured to execute the computer-executable instructions stored in the memory 1001, to implement a lane line information determining method provided in the following embodiments of this application.

Optionally, the computer-executable instructions in this embodiment of this application may also be referred to as application program code. This is not specifically limited in this embodiment of this application.

An embodiment of this application further provides a probing system, configured to provide a probing function for a vehicle. The probing system includes at least one lane line information determining apparatus mentioned in the foregoing embodiments of this application, or includes a device including the lane line information determining apparatus, and at least one sensor.

An embodiment of this application further provides a system, used in unmanned driving or intelligent driving, and the system includes at least one lane line information determining apparatus mentioned in the foregoing embodiments of this application or a device including the lane line information determining apparatus. Further, the system may further include a central controller, and the system may provide decision or control for the unmanned driving or the intelligent driving.

An embodiment of this application further provides a vehicle. The vehicle includes at least one lane line information determining apparatus mentioned in the foregoing embodiments of this application or a device including the lane line information determining apparatus.

A person of ordinary skill in the art may understand that various reference numerals such as "first" and "second" in this application are merely used for differentiation for ease of description, are not used to limit the scope of the embodiments of this application, and also represent a sequence. "And/or" describes an association relationship between associated objects and represents that three relationships may exist. For example, A and/or B may represent three cases: There is only A, there are both A and B, and there is only B. The character "/" usually indicates an "or" relationship between associated objects. "At least one" means one or more. At least two means two or more. "At least one", "any one", or a similar expression means any combination of these items, including a single item or any combination of a plurality of items. For example, at least one item (piece) of a, b, or c may represent a, b, c, a and b, a and c, b and c, or a, b, and c, where a, b, and c may be singular or plural. "A plurality of" means two or more, and another quantifier is similar to this. In addition, an element (element) that appears in singular forms "a", "an", and "the" does not mean "one or only one" unless otherwise specified in the context, but means "one or more". For example, "a device" means one or more such devices.

All or some of the foregoing embodiments may be implemented by using software, hardware, firmware, or any combination thereof. When being implemented by using the software, all or some of the embodiments may be implemented in a form of a computer program product. The computer program product includes one or more computer instructions. When the computer program instructions are loaded and executed on a computer, all or some of the procedures or the functions according to the embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid State Disk, SSD)), or the like.

The various illustrative logical units and circuits described in the embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk drive, a removable magnetic disk, a CD-ROM, or a storage medium of any other form in the art. For example, the storage medium may connect to a processor, so that the processor can read information from the storage medium and write information into the storage medium. Optionally, the storage medium may alternatively be integrated into the processor. The processor and the storage medium may be disposed in the ASIC.

These computer program instructions may alternatively be loaded onto a computer or another programmable data processing device, so that a series of operation steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

Although this application is described with reference to specific features and the embodiments thereof, it is clear that the specification and accompanying drawings are merely example descriptions of this application defined by the appended claims. This application is intended to cover modifications and variations of this application provided that they fall within the scope of the claims of this application.

## Claims

1. A lane line information determining method, comprising:
sending, by a positioning module, location information of the current location of a vehicle to a map server (501, 601, 701, 801);
obtaining, by a first apparatus, first lane line information corresponding to a location of the vehicle (201), wherein the first lane line information is sent (507, 606, 706, 806) from the map server after obtaining the first lane line information based on the location information of the vehicle by the map server,
wherein the first lane line information comprises information about at least one first lane line,
wherein the first lane line information includes:
- a first lane line quantity,
- a first lane line type, and
- a lane line curve type,
wherein the first lane line quantity is a quantity of lane lines that are stored in the map server and correspond to the location of the vehicle,
and wherein the first lane line type is a lane line type that is stored in the map server and corresponds to the location of the vehicle,
and wherein the lane line curve type includes a curve or a straight line;
obtaining, by the first apparatus, second lane line information, (202, 607, 704, 807)
wherein the second lane line information comprises information about at least one second lane line,
wherein the second lane line information includes:
- a second lane line quantity,
- a second lane line type, and
- a lane line curvature,
wherein the second lane line quantity is a quantity of lane lines detected by an image shooting apparatus, the image shooting apparatus being a vehicle-mounted apparatus, and
wherein the second lane line type is a lane line type that is detected by the image shooting apparatus,
wherein the lane line curvature refers to a bending degree of each lane line,
determining, by the first apparatus, third lane line information based on the first lane line information and the second lane line information (203, 508, 609, 707, 808),
wherein the third lane line information comprises information about a part of or all lane lines in the at least one second lane line, wherein the third line information is obtained by merging the first lane line information with the second line information,
wherein the third lane line information includes:
- a third lane line quantity,
- a third lane line type, and
- a lane line curvature,
**characterised in that**
if the first apparatus determines that at least one lane line in the at least one second lane line is abnormal - whereas the second lane line is determined to be abnormal, when the second lane line quantity is different from a lane line quantity determined when the vehicle is
at a previous location, or when the second lane line type is different from a lane line type determined when the vehicle is
at a previous location - or determines that map information of the map server changes - wherein this
determining by the first apparatus is performed via detecting that the map information changes or via reception of a signal, such as a base station broadcast signal or a calibration location signal, that triggers GPS calibration or map calibration -, sending, by the first apparatus, a request message to the map server, (506, 605, 705, 805) wherein the request message is used to request to obtain the first lane line information.

2. The method according to claim 1,
wherein the second lane line information includes at least one of:
- a lane line lateral offset,
- a lane line orientation, and
- a derivative of the lane line curvature,
wherein the lane line lateral offset refers to a lateral offset distance between each lane line and the vehicle,
wherein the lane line orientation is an orientation of each lane line in a vehicle coordinate system, and
wherein the lane line curvature refers to a bending degree of each lane line.

3. The method according to claim 1 or 2, wherein the third lane line information includes at least one of:
- a lane line lateral offset,
- a lane line orientation, and
- a derivative of the lane line curvature.

4. The method according to any of claims 1 to 3,
wherein the determining, by the first apparatus, third lane line information based on the first lane line information and the second lane line information comprises:
determining, by the first apparatus, the third lane line information based on the first lane line information, the second lane line information, and at least one piece of historical lane line information, whereas the at least one piece of historical lane line information is a final result of lane line information that was previously determined at a previous moment or a previous location.

5. A lane line information determining apparatus (900, 1000), comprising:
a communication unit (901), configured to: obtain first lane line information corresponding to a location of a vehicle (201), wherein the first lane line information is sent from a map server (507, 606, 706, 806), after receiving location information of the current location
of the vehicle sent to the map server by a positioning module (501, 601, 701, 801) and after obtaining the first lane line information based on the location information of the vehicle by the map server,
wherein the first lane line information comprises information about at least one first lane line,
wherein the first lane line information includes:
- a first lane line quantity,
- a first lane line type, and
- a lane line curve type,
wherein the first lane line quantity is a quantity of lane lines that are stored in the map server and correspond to the location of the vehicle,
wherein the first lane line type is a lane line type that is stored in the map server and corresponds to the location of the vehicle, and
wherein the lane line curve type includes a curve or a straight line; and
obtain second lane line information, (202, 607, 704, 807)
wherein the second lane line information comprises information about at least one second lane line,
wherein the second lane line information includes:
- a second lane line quantity,
- a second lane line type, and
- a lane line curvature,
wherein the second lane line quantity is a quantity of lane lines detected by an image shooting apparatus, the image shooting apparatus being a vehicle-mounted apparatus,
wherein the second lane line type is a lane line type that is detected by the image shooting apparatus, and
wherein the lane line curvature refers to a bending degree of each lane line; and
a processing unit (902), configured to determine third lane line information based on the first lane line information and the second lane line information (203, 508, 609, 707, 808),
wherein the third lane line information comprises information about a part of or all lane lines in the at least one second lane line, wherein the third line information is obtained by merging the first lane line information with the second line information,
wherein the third lane line information includes:
- a third lane line quantity,
- a third lane line type,
- a lane line curvature,
**characterised in that**
the processing unit (902) is further configured to determine that at least one lane line in the at least one second lane line is abnormal - wherein the second lane line is determined to be abnormal, when the second lane line quantity is different from a lane line quantity determined when the vehicle is
at a previous location, or when the second lane line type is different from a lane line type determined when the vehicle is
at a previous location - or determines that map information of the map server changes
- determining by the first apparatus via detecting that the map information changes or via reception of a signal, such as a base station broadcast signal or a calibration location signal, that triggers GPS calibration or map calibration -; and
the communication unit (901) is further configured to send a request message to the map server (506, 605, 705, 805), wherein the request message is used to request to obtain the first lane line information.

6. The apparatus according to claim 5,
wherein the second lane line information includes at least one of:
- a lane line lateral offset,
- a lane line orientation, and
- a derivative of the lane line curvature,
wherein the lane line lateral offset refers to a lateral offset distance between each lane line and the vehicle, and
wherein the lane line orientation is an orientation of each lane line in a vehicle coordinate system.

7. The apparatus according to claim 5 or 6,
wherein the third lane line information includes at least one of:
- a lane line lateral offset,
- a lane line orientation, and
- a derivative of the lane line curvature.

8. The apparatus according to any of the claims 5 to 7. wherein the processing unit (902) is specifically configured to determine the third lane line information based on the first lane line information, the second lane line information, and at least one piece of historical lane line information, wherein the at least one piece of historical lane line
information is a final result of lane line information that was previously determined at a previous moment or a previous location.

9. An in-vehicle system, comprising the apparatus according to any one of claims 5 to 8.

## Patentansprüche

1. Verfahren zum Bestimmen von Spurlinieninformationen, umfassend:
Senden von Standortinformationen des aktuellen Standorts eines Fahrzeugs durch ein Positionierungsmodul an einen Kartenserver (501, 601, 701, 801);
Erlangen von ersten Spurlinieninformationen entsprechend einem Standort des Fahrzeugs (201) durch eine erste Einrichtung, wobei die ersten Spurlinieninformationen von dem Kartenserver gesendet (507, 606, 706, 806) werden, nachdem die ersten Spurlinieninformationen basierend auf den Standortinformationen des Fahrzeugs durch den Kartenserver erlangt wurden,
wobei die ersten Spurlinieninformationen Informationen über mindestens eine erste Spurlinie umfassen,
wobei die ersten Spurlinieninformationen Folgendes beinhalten:
- eine erste Spurlinienmenge,
- einen ersten Spurlinientyp und
- ein Spurlinienkurventyp,
wobei die erste Spurlinienmenge eine Menge von Spurlinien ist, die in dem Kartenserver gespeichert sind und dem Standort des Fahrzeugs entsprechen,
und wobei der erste Spurlinientyp ein Spurlinientyp ist, der in dem Kartenserver gespeichert ist und dem Standort des Fahrzeugs entspricht,
und wobei der Spurlinienkurventyp eine Kurve oder eine gerade Linie beinhaltet;
Erlangen von zweiten Spurlinieninformationen (202, 607, 704, 807) durch die erste Einrichtung,
wobei die zweiten Spurlinieninformationen Informationen über mindestens eine zweite Spurlinie umfassen,
wobei die zweiten Spurlinieninformationen Folgendes beinhalten:
- eine zweite Spurlinienmenge,
- einen zweiten Spurlinientyp und
- eine Spurlinienkrümmung,
wobei die zweite Spurlinienmenge eine Menge von Spurlinien ist, die durch eine Bildaufnahmeeinrichtung erfasst wird, wobei die Bildaufnahmeeinrichtung eine fahrzeugmontierte Einrichtung ist, und
wobei der zweite Spurlinientyp ein Spurlinientyp ist, der durch die Bildaufnahmeeinrichtung erfasst wird,
wobei sich die Spurlinienkrümmung auf den Krümmungsgrad jeder Spurlinie bezieht,
Bestimmen von dritten Spurlinieninformationen durch die erste Einrichtung basierend auf den ersten Spurlinieninformationen und den zweiten Spurlinieninformationen (203, 508, 609, 707, 808), wobei die dritten Spurlinieninformationen Informationen über einen Teil von oder alle Spurlinien in der mindestens einen zweiten Spurlinie umfassen, wobei die dritten Linieninformationen durch Zusammenführen der ersten Spurlinieninformationen mit den zweiten Linieninformationen erlangt werden,
wobei die dritten Spurlinieninformationen Folgendes beinhalten:
- eine dritte Spurlinienmenge,
- einen dritten Spurlinientyp und
- eine Spurlinienkrümmung,
**dadurch gekennzeichnet, dass**
sofern die erste Einrichtung bestimmt, dass mindestens eine Spurlinie in der mindestens einen zweiten Spurlinie anormal ist - wohingegen die zweite Spurlinie als anormal bestimmt wird, wenn sich die zweite Spurlinienmenge von einer Spurlinienmenge unterscheidet, die bestimmt wird, wenn sich das Fahrzeug an einem vorherigen Standort befindet, oder wenn sich der zweite Spurlinientyp von einem Spurlinientyp unterscheidet, der bestimmt wird, wenn sich das Fahrzeug an einem vorherigen Standort befindet - oder bestimmt, dass sich Karteninformationen des Kartenservers ändern - wobei dieses Bestimmen durch die erste Einrichtung über Erfassen, dass sich die Karteninformationen ändern, oder über den Empfang eines Signals, wie etwa eines Rundfunksignals der Basisstation oder eines Kalibrierungsstandortsignals, das eine GPS-Kalibrierung oder Kartenkalibrierung auslöst, durchgeführt wird -, Senden einer Anforderungsnachricht durch die erste Einrichtung an den Kartenserver (506, 605, 705, 805), wobei die Anforderungsnachricht verwendet wird, um das Erlangen der ersten Spurlinieninformationen anzufordern.

2. Verfahren nach Anspruch 1,
wobei die zweiten Spurlinieninformationen mindestens eines der Folgenden beinhalten:
- einen seitlichen Spurlinienversatz,
- eine Spurlinienausrichtung und
- eine Ableitung der Spurlinienkrümmung,
wobei sich der seitliche Spurlinienversatz auf einen seitlichen Versatzabstand zwischen jeder Spurlinie und dem Fahrzeug bezieht,
wobei die Spurlinienausrichtung eine Ausrichtung jeder Spurlinie in einem Fahrzeugkoordinatensystem ist, und
wobei sich die Spurlinienkrümmung auf den Krümmungsgrad jeder Spurlinie bezieht.

3. Verfahren nach Anspruch 1 oder 2,
wobei die dritten Spurlinieninformationen mindestens eines der Folgenden beinhalten:
- einen seitlichen Spurlinienversatz,
- eine Spurlinienausrichtung und
- eine Ableitung der Spurlinienkrümmung.

4. Verfahren nach einem der Ansprüche 1 bis 3,
wobei das Bestimmen dritter Spurlinieninformationen durch die erste Einrichtung basierend auf den ersten Spurlinieninformationen und den zweiten Spurlinieninformationen Folgendes umfasst:
Bestimmen der dritten Spurlinieninformationen durch die erste Einrichtung basierend auf den ersten Spurlinieninformationen, den zweiten Spurlinieninformationen und mindestens einer historischen Spurlinieninformation, wohingegen die mindestens eine historische Spurlinieninformation ein Endergebnis von Spurlinieninformationen ist, die zu einem vorherigen Zeitpunkt oder an einem vorherigen Standort bestimmt wurden.

5. Einrichtung (900, 1000) zum Bestimmen von Spurlinieninformationen, umfassend:
eine Kommunikationseinheit (901), die dazu konfiguriert ist:
erste Spurlinieninformationen entsprechend einem Standort eines Fahrzeugs (201) zu erlangen, wobei die ersten Spurlinieninformationen von einem Kartenserver (507, 606, 706, 806) gesendet werden, nachdem Standortinformationen des aktuellen Standorts des Fahrzeugs, die durch ein Positionierungsmodul (501, 601, 701, 801) an den Kartenserver gesendet werden, empfangen wurden und nachdem die ersten Spurlinieninformationen basierend auf den Standortinformationen des Fahrzeugs durch den Kartenserver erlangt wurden,
wobei die ersten Spurlinieninformationen Informationen über mindestens eine erste Spurlinie umfassen,
wobei die ersten Spurlinieninformationen Folgendes beinhalten:
- eine erste Spurlinienmenge,
- einen ersten Spurlinientyp und
- ein Spurlinienkurventyp,
wobei die erste Spurlinienmenge eine Menge von Spurlinien ist, die in dem Kartenserver gespeichert sind und dem Standort des Fahrzeugs entsprechen,
wobei der erste Spurlinientyp ein Spurlinientyp ist, der in dem Kartenserver gespeichert ist und dem Standort des Fahrzeugs entspricht, und
wobei der Spurlinienkurventyp eine Kurve oder eine gerade Linie beinhaltet; und
zweite Spurlinieninformationen (202, 607, 704, 807) zu erlangen, wobei die zweiten Spurlinieninformationen Informationen über mindestens eine zweite Spurlinie umfassen,
wobei die zweiten Spurlinieninformationen Folgendes beinhalten:
- eine zweite Spurlinienmenge,
- einen zweiten Spurlinientyp und
- eine Spurlinienkrümmung,
wobei die zweite Spurlinienmenge eine Menge von Spurlinien ist, die durch eine Bildaufnahmeeinrichtung erfasst wird, wobei die Bildaufnahmeeinrichtung eine fahrzeugmontierte Einrichtung ist, wobei der zweite Spurlinientyp ein Spurlinientyp ist, der durch die Bildaufnahmeeinrichtung erfasst wird, und
wobei sich die Spurlinienkrümmung auf den Krümmungsgrad jeder Spurlinie bezieht; und
eine Verarbeitungseinheit (902), die dazu konfiguriert ist, dritte Spurlinieninformationen basierend auf den ersten Spurlinieninformationen und den zweiten Spurlinieninformationen (203, 508, 609, 707, 808) zu bestimmen,
wobei die dritten Spurlinieninformationen Informationen über einen Teil von oder alle Spurlinien in der mindestens einen zweiten Spurlinie umfassen, wobei die dritten Linieninformationen durch Zusammenführen der ersten Spurlinieninformationen mit den zweiten Linieninformationen erlangt werden,
wobei die dritten Spurlinieninformationen Folgendes beinhalten:
- eine dritte Spurlinienmenge,
- einen dritten Spurlinientyp,
- eine Spurlinienkrümmung,
**dadurch gekennzeichnet, dass**
die Verarbeitungseinheit (902) ferner dazu konfiguriert ist, zu bestimmen, dass mindestens eine Spurlinie in der mindestens einen zweiten Spurlinie anormal ist - wobei
die zweite Spurlinie als anormal bestimmt wird, wenn sich die zweite Spurlinienmenge von einer Spurlinienmenge unterscheidet, die bestimmt wird, wenn sich das Fahrzeug an einem vorherigen Standort befindet, oder wenn sich der zweite Spurlinientyp von einem Spurlinientyp unterscheidet, der bestimmt wird, wenn sich das Fahrzeug an einem vorherigen Standort befindet - oder bestimmt, dass sich die Karteninformationen des Kartenservers ändern - Bestimmen durch die erste Einrichtung über Erfassen, dass sich die Karteninformationen ändern, oder über Empfang eines Signals, wie etwa eines Sendesignals einer Basisstation oder eines Kalibrierungsstandortsignals, das eine GPS-Kalibrierung oder Kartenkalibrierung auslöst -; und
die Kommunikationseinheit (901) ferner dazu konfiguriert ist, eine Anforderungsnachricht an den Kartenserver (506, 605, 705, 805) zu senden, wobei die Anforderungsnachricht verwendet wird, um das Erlangen der ersten Spurlinieninformationen anzufordern.

6. Vorrichtung nach Anspruch 5,
wobei die zweiten Spurlinieninformationen mindestens eines der Folgenden beinhalten:
- einen seitlichen Spurlinienversatz,
- eine Spurlinienausrichtung und
- eine Ableitung der Spurlinienkrümmung,
wobei sich der seitliche Spurlinienversatz auf einen seitlichen Versatzabstand zwischen jeder Spurlinie und dem Fahrzeug bezieht, und
wobei die Spurlinienausrichtung eine Ausrichtung jeder Spurlinie in einem Fahrzeugkoordinatensystem ist.

7. Vorrichtung nach Anspruch 5 oder 6,
wobei die dritten Spurlinieninformationen mindestens eines der Folgenden beinhalten:
- einen seitlichen Spurlinienversatz,
- eine Spurlinienausrichtung und
- eine Ableitung der Spurlinienkrümmung.

8. Vorrichtung nach einem der Ansprüche 5 bis 7, wobei die Verarbeitungseinheit (902) speziell dazu konfiguriert ist, die dritten Spurlinieninformationen basierend auf den ersten Spurlinieninformationen, den zweiten Spurlinieninformationen und mindestens einer historischen Spurlinieninformation zu bestimmen, wobei
die mindestens eine historische Spurlinieninformation ein Endergebnis von Spurlinieninformationen ist, die zu einem vorherigen Zeitpunkt oder an einem vorherigen Standort bestimmt wurden.

9. Fahrzeugeigenes System, umfassend die Einrichtung nach einem der Ansprüche 5 bis 8.

## Revendications

1. Procédé de détermination d'informations de ligne de voie, comprenant :
l'envoi, par un module de positionnement, d'informations de localisation de l'emplacement actuel d'un véhicule à un serveur de cartes (501, 601, 701, 801) ;
l'obtention, par un premier appareil, des informations de première ligne de voie correspondant à un emplacement du véhicule (201), dans lequel les informations de première ligne de voie sont envoyées (507, 606, 706, 806) à partir du serveur de cartes après l'obtention des informations de première ligne de voie sur la base des informations de localisation du véhicule par le serveur de cartes,
dans lequel les informations de première ligne de voie comprennent des informations d'au moins une première ligne de voie,
dans lequel les informations de première ligne de voie comportent :
- une quantité de premières lignes de voie,
- un type de premières lignes de voie, et
- un type de courbures de lignes de voie,
dans lequel la quantité de premières lignes de voie est une quantité de lignes de voie qui sont stockées dans le serveur de cartes et correspondent à l'emplacement du véhicule,
et dans lequel le type de premières lignes de voie est un type de lignes de voie qui est stocké dans le serveur de cartes et
correspond à l'emplacement du véhicule,
et dans lequel le type de courbures de ligne de voie comporte une courbure ou une ligne droite ;
l'obtention, par le premier appareil, d'informations de deuxième ligne de voie, (202, 607, 704, 807)
dans lequel les informations de deuxième ligne de voie comprennent des informations d'au moins une deuxième ligne de voie,
dans lequel les informations de deuxième ligne de voie comportent :
- une quantité de deuxièmes lignes de voie,
- un type de deuxièmes lignes de voie, et
- une courbure de ligne de voie,
dans lequel la quantité de deuxièmes lignes de voie est une quantité de lignes de voie détectées par un appareil de prise de vue d'image, l'appareil de prise de vue d'image étant un appareil monté sur véhicule, et
dans lequel le type de deuxièmes lignes de voie est un type de lignes de voie qui est détecté par l'appareil de prise de vue d'image,
dans lequel la courbure de ligne de voie fait référence à un degré de courbure de chaque ligne de voie,
la détermination, par le premier appareil, des informations de troisième ligne de voie sur la base des informations de première ligne de voie et des informations de deuxième ligne de voie (203, 508, 609, 707, 808),
dans lequel les informations de troisième ligne de voie comprennent des informations d'une partie ou de la totalité des lignes de voie dans l'au moins une deuxième ligne de voie, dans lequel les informations de troisième ligne sont obtenues en fusionnant les informations de première ligne de voie avec les informations de deuxième ligne,
dans lequel les informations de troisième ligne de voie comportent :
- une quantité de troisièmes lignes de voie,
- un type de troisièmes de lignes de voie, et
- une courbure de ligne de voie,
**caractérisé en ce que**
si le premier appareil détermine qu'au moins une ligne de voie dans l'au moins une deuxième ligne de voie est anormale alors que la deuxième ligne de voie est déterminée comme étant anormale, lorsque la quantité de deuxièmes lignes de voie est différente d'une quantité de lignes de voie déterminées lorsque le véhicule est à un emplacement précédent, ou lorsque le type de deuxièmes lignes de voie est différent d'un type de lignes de voie déterminé lorsque le véhicule est à un emplacement précédent ou détermine que les informations cartographiques du serveur de cartes changent, dans lequel cette détermination par le premier appareil est réalisée par le biais de la détection du fait que les informations cartographiques changent ou par le biais de la réception d'un signal, tel qu'un signal de diffusion de station de base ou un signal d'emplacement d'étalonnage, qui déclenche l'étalonnage GPS ou l'étalonnage de carte, l'envoi, par le premier appareil, d'un message de demande au serveur de cartes, (506, 605, 705, 805) dans lequel le message de demande est utilisé pour demander l'obtention des informations de première ligne de voie.

2. Procédé selon la revendication 1,
dans lequel les informations de deuxième ligne de voie comportent au moins l'un :
- d'un décalage latéral de ligne de voie,
- d'une orientation de ligne de voie, et
- d'un dérivé de la courbure de ligne de voie,
dans lequel le décalage latéral de la ligne de voie fait référence à une distance de décalage latéral entre chaque ligne de voie et le véhicule,
dans lequel l'orientation de la ligne de voie est une orientation de chaque ligne de voie dans un système de coordonnées de véhicule, et
dans lequel la courbure de ligne de voie fait référence à un degré de courbure de chaque ligne de voie.

3. Procédé selon la revendication 1 ou 2,
dans lequel les informations de troisième ligne de voie comportent au moins l'un :
- d'un décalage latéral de ligne de voie,
- d'une orientation de ligne de voie, et
- d'un dérivé de la courbure de ligne de voie.

4. Procédé selon l'une quelconque des revendications 1 à 3, dans lequel la détermination, par le premier appareil, des informations de troisième ligne de voie sur la base des informations de première ligne de voie et des informations de deuxième ligne de voie comprend :
la détermination, par le premier appareil, des informations de troisième ligne de voie sur la base des informations de première ligne de voie, des informations de deuxième ligne de voie et d'au moins un élément d'information de ligne de voie historique, tandis que l'au moins un élément d'information de ligne de voie historique est un résultat final d'informations de ligne de voie qui ont été précédemment déterminées à un moment précédent ou à un emplacement précédent.

5. Appareil de détermination d'informations de ligne de voie (900, 1000), comprenant :
une unité de communication (901), configurée pour : obtenir des informations de première ligne de voie correspondant à l'emplacement d'un véhicule (201), dans lequel les informations sont envoyées par un serveur de cartes (507, 606, 706, 806), après la réception des informations de localisation de l'emplacement actuel du véhicule envoyées au serveur de cartes par un module de positionnement (501, 601, 701, 801) et après l'obtention des informations de première ligne de voie sur la base des informations de localisation du véhicule par le serveur de cartes,
dans lequel les informations de première ligne de voie comprennent des informations d'au moins une première ligne de voie,
dans lequel les informations de première ligne de voie comportent :
- une quantité de premières lignes de voie,
- un type de premières lignes de voie, et
- un type de courbures de lignes de voie,
dans lequel la quantité de premières lignes de voie est une quantité de lignes de voie qui sont stockées dans le serveur de cartes et correspondent à l'emplacement du véhicule,
dans lequel le type de premières lignes de voie est un type de lignes de voie qui est stocké dans le serveur de cartes et correspond à l'emplacement du véhicule, et
dans lequel le type de courbures de lignes de voie comporte une courbure ou une ligne droite ; et
l'obtention des informations de deuxième ligne de voie, (202, 607, 704, 807)
dans lequel les informations de deuxième ligne de voie comprennent des informations d'au moins une deuxième ligne de voie,
dans lequel les informations de deuxième ligne de voie comportent :
- une quantité de deuxièmes lignes de voie,
- un type de deuxièmes lignes de voie, et
- une courbure de ligne de voie,
dans lequel la quantité de deuxièmes lignes de voie est une quantité de lignes de voie détectées par un appareil de prise de vue d'image, l'appareil de prise de vue d'image étant un appareil monté sur véhicule,
dans lequel le type de deuxièmes lignes de voie est un type de lignes de voie qui est détecté par l'appareil de prise de vue d'image, et
dans lequel la courbure de ligne de voie fait référence à un degré de courbure de chaque ligne de voie ; et
une unité de traitement (902), configurée pour déterminer les informations de troisième ligne de voie sur la base des informations de première ligne de voie et des informations de deuxième ligne de voie (203, 508, 609, 707, 808),
dans lequel les informations de troisième ligne de voie comprennent des informations d'une partie ou de la totalité des lignes de voie dans l'au moins une deuxième ligne de voie, dans lequel les informations de troisième ligne sont obtenues en fusionnant les informations de première ligne de voie avec les informations de deuxième ligne,
dans lequel les informations de troisième ligne de voie comportent :
- une quantité de troisièmes lignes de voie,
- un type de troisièmes lignes de voie,
- une courbure de ligne de voie,
**caractérisé en ce que**
l'unité de traitement (902) est également configurée pour déterminer qu'au moins une ligne de voie dans l'au moins une deuxième ligne de voie est anormale, dans lequel la deuxième ligne de voie est déterminée comme anormale, lorsque la quantité de deuxièmes lignes de voie est différente d'une quantité de lignes de voie déterminée lorsque le véhicule se trouve à un emplacement précédent, ou lorsque le type de lignes de voie de la deuxième ligne de voie est différent d'un type de lignes de voie déterminé lorsque le véhicule se trouve à un emplacement précédent ou détermine que les informations cartographiques du serveur de cartes changent, la détermination par le premier appareil par le biais de la détection que les informations cartographiques changent ou par le biais de la réception d'un signal, tel qu'un signal de diffusion de station de base ou un signal de localisation d'étalonnage, qui déclenche l'étalonnage GPS ou l'étalonnage de la carte ; et
l'unité de communication (901) est également configurée pour envoyer un message de demande au serveur de cartes (506, 605, 705, 805), dans lequel le message de demande est utilisé pour demander l'obtention des informations de première ligne de voie.

6. Appareil selon la revendication 5,
dans lequel les informations de deuxième ligne de voie comportent au moins l'un :
- d'un décalage latéral de ligne de voie,
- d'une orientation de ligne de voie, et
- d'un dérivé de la courbure de ligne de voie,
dans lequel le décalage latéral de la ligne de voie fait référence à une distance de décalage latéral entre chaque ligne de voie et le véhicule, et
dans lequel l'orientation de la ligne de voie est une orientation de chaque ligne de voie dans un système de coordonnées de véhicule.

7. Appareil selon la revendication 5 ou 6,
dans lequel les informations de troisième ligne de voie comportent au moins l'un :
- d'un décalage latéral de ligne de voie,
- d'une orientation de ligne de voie, et
- d'un dérivé de la courbure de ligne de voie.

8. Appareil selon l'une quelconque des revendications 5 à 7, dans lequel l'unité de traitement (902) est spécifiquement configurée pour déterminer les informations de troisième ligne de voie sur la base des informations de première ligne de voie, de deuxième ligne de voie et d'au moins une information historique de ligne voie, dans lequel
au moins une information historique de ligne de voie est un résultat final d'informations de ligne de voie qui ont été précédemment déterminées à un moment ou à un emplacement antérieur.

9. Système embarqué, comprenant l'appareil selon l'une quelconque des revendications 5 à 8.
